# EUROPEAN PATENT SPECIFICATION

(11) **EP 3 326 338 B1**
(45) Date of publication and mention of the grant of the patent: **24.03.2021**
(21) Application number: 15899782.5
(22) Date of filing: 24.07.2015
(51) Int. Cl.: H04L 12/883, H04L 12/861, H04L 12/863

(54) **FLOW PINNING IN A SERVER ON A CHIP**
FLUSSVERANKERUNG IN EINEM SERVER AUF EINEM CHIP
BLOCAGE DE FLUX DANS UN SERVEUR SUR PUCE

(43) Date of publication of application: 30.05.2018
(73) Proprietor: Ampere Computing LLC, Santa Clara, California 95054 (US)
(72) Inventor: CHUDGAR, Keyur, San Jose, California 95129 (US); SANKARAN, Kumar, San Jose, California 95136 (US)
(74) Representative: Papula Oy
(86) International application number: PCT/US2015/041911
(87) International publication number: WO 2017/018980

(56) References cited:
- WO-A2-2012/129432
- US-A1- 2003 007 489
- US-A1- 2007 011 734
- US-B1- 8 762 362
- US-B1- 8 767 757
- US-B2- 7 715 428

## Description

### TECHNICAL FIELD

This disclosure relates to flow pinning in a server on a chip.

### BACKGROUND

In computing networks, an Ethernet interface can receive packets from many different Ethernet connections or flows. In some systems, these flows of packets are processed serially, as they are received by a dedicated processor. In other traditional systems, these flows of packets are processed by peripheral network interface cards that enqueue the packets and/or flows to specific queues that are associated with a given CPU (central processing unit) in a multi-core processor. Network interface cards are expensive however, both in terms of cost, power, and latency, as well as taking up a lot of space in a system. A prior art document US 7 715 428 B2 discloses a set of techniques that enable sustaining media speed by distributing transmit and receive side processing over multiple processing cores. These techniques enable designing multithreaded network interface controller hardware that efficiently hides the latency of direct memory access operations associated with data packet transfers over an input/output bus.

The above-described description merely provides a contextual overview of current techniques for performing flow pinning in a system on a chip and is not exhaustive.

### SUMMARY

The invention is defined by a server on a chip according to claim 1, and a method according to claim 7. Further embodiments are defined in the independent claims.

In an example embodiment there is provided a server on a chip that has the features recited in the independent claim directed thereto.

In another example embodiment there is provided a computer implemented method for flow pinning a packet stream to a core of a multiprocessor. The method comprises the features recited in the independent claim directed to a method.

### BRIEF DESCRIPTION OF THE DRAWINGS

**FIG. 1** is a block diagram illustrating an embodiment of a system that performs flow pinning.
**FIG. 2** is a block diagram illustrating an embodiment of a system that performs flow pinning.
**FIG. 3** is a block diagram illustrating an embodiment of a system that performs metadata extraction from a packet header.
**FIG. 4** is a block diagram illustrating an embodiment of a system that performs packet enqueuing.
**FIG. 5** is a block diagram illustrating an embodiment of a system that performs flow pinning.
**FIG. 6** illustrates a flow diagram of an embodiment of a method for flow pinning.
**FIG. 7** illustrates a flow diagram of an embodiment of means for extracting a metadata string from a packet data.
**FIG. 8** illustrates a flow diagram of an embodiment of means for associating packet with a processor based on a metadata string.
**FIG. 9** illustrates a flow diagram of an embodiment of means for assigning a packet to a queue associated with a processor.
**FIG. 10** illustrates a block diagram of an electronic computing environment.
**FIG. 11** illustrates a block diagram of a data communication network.

### DETAILED DESCRIPTION

Various embodiments provide for a system on a chip or a server on a chip that performs flow pinning, where packets or streams of packets are enqueued to specific queues, wherein each queue is associated with a respective core in a multiprocessor/multi-core system or server on a chip. With each stream of packets, or flow, assigned to a particular processor, the server on a chip can process and intake packets from multiple queues from multiple streams from the same single Ethernet interface in parallel. Each of the queues can issue interrupts to their assigned processors, allowing each of the processors to receive packets from their respective queues at the same time. Packet processing speed is therefore increased by receiving and processing packets in parallel for different streams.

Performing flow pinning in this way, where each queue is associated with a respective core allows the throughput of incoming traffic with multiple streams to be increased. Cache and CPU utilization are also increased, as each core is used, and each core can access its own cache memory. This allows hardware costs to be reduced, while efficiently increasing system throughput.

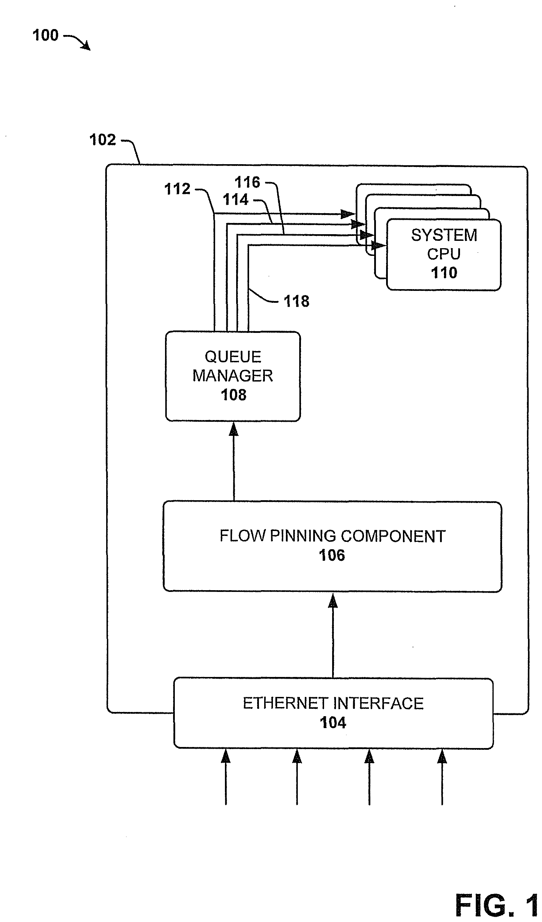

**FIG. 1** illustrates a system 100 that performs flow pinning in accordance with embodiments described herein. System 100 includes a system and/or server on a chip (SoC) 102 that includes an Ethernet interface 104. Ethernet interface 104 receives incoming packets over a network. The packets can form one or more streams or flows of data that are associated with one or more other computing devices on the network. In some embodiments, multiple flows of packets can be received from a single computing device, and in other embodiments, multiple flows of packets can be received from corresponding computing devices. The computing devices that the packets are received from include, but are not limited to, routers, switches, directly from other SoCs, and the packets can be received via the local network, intranet, or Internet. In some embodiments, SoC 102 can include multiple Ethernet interfaces.

Ethernet interface 104 can pass the streams and/or flows of packets to a flow pinning component 106. Based on layer 3 and/or layer 4 header data and/or metadata information associated with the packets, the flow pinning component 106 associates flows of packets with one or more cores of system CPU 110. Each flow is assigned to a respective core of system CPU 110, or alternatively, each of core of system CPU 110 can be assigned one of, or a set of, the packet streams received at the Ethernet interface 104.

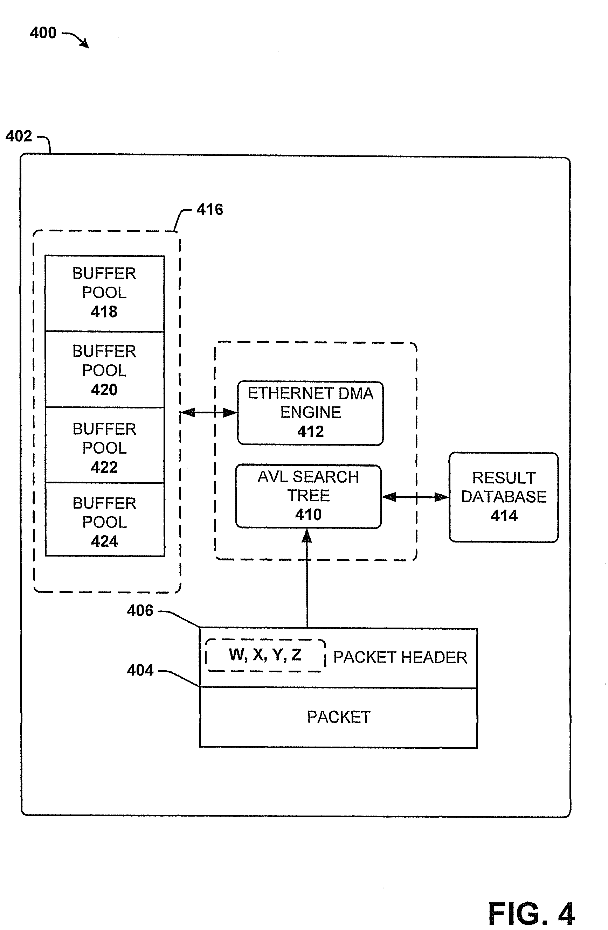

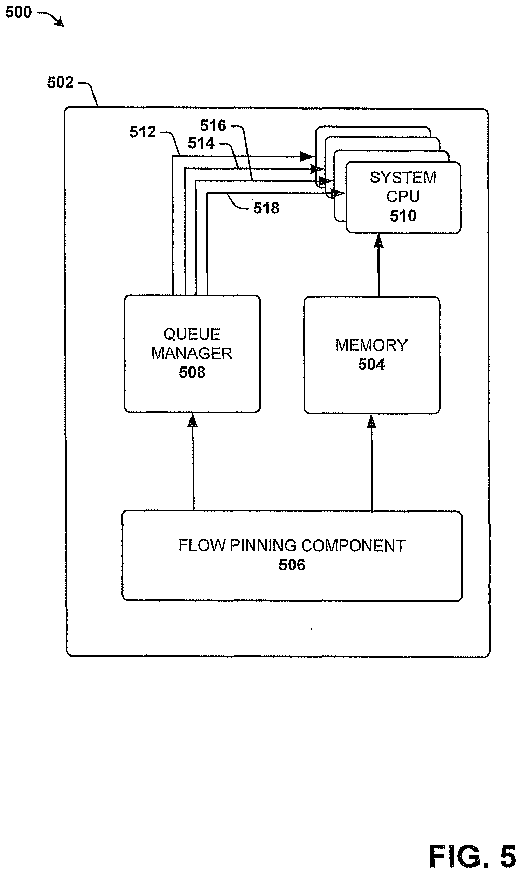

Once the streams/flows of packets are assigned to respective cores of system CPU 110, the flow pinning component 106 can pass packets or packet header information to queue manager 118, which enqueues the packet and/or packet header information into queues 112, 114, 116, and 118 that are each associated with a respective one of the cores of system CPU 110. In an embodiment, packets are stored in a memory (shown in more detail in **FIG. 4** and **FIG. 5****)** while descriptor messages associated with packets are enqueued in queues 112, 114, 116, and 118. The descriptor messages, when system CPU 110 receives their interrupts from queue manager 108, provide information about memory address of packets that were stored in memory.

While the embodiment shown in **FIG. 1** depicts 4 cores in system CPU 110, in other embodiments, other numbers of cores are possible, and the number of queues corresponds to the number of cores.

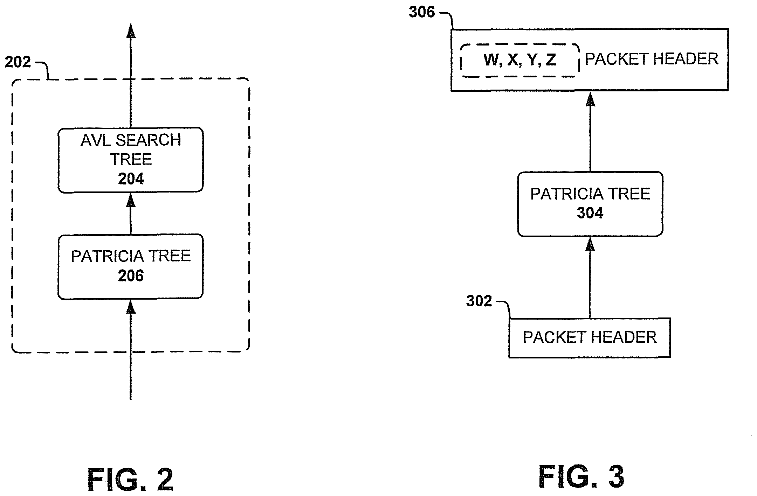

**FIG. 2****,** illustrates a block diagram of an embodiment of a system 200 that performs flow pinning. System 200 includes a flow pinning component 202 (e.g. flow pinning component 106) that can be configured for associating packets and/or packet streams with respective cores based on metadata associated with packets.

Flow pinning component 202 can include first data structure 206 that in an embodiment can be a patricia tree. Patricia tree 206 can be a space optimized tree data structure where each node with only one child is merged with its child. Patricia trees in general are useful for constructing associative arrays with keys that can be expressed as strings. In an embodiment of the disclosure, patricia tree 206 can be configured for extracting a metadata string from a packet or packet header. The metadata string extracted by patricia tree 206 can be a 4-tuple string that includes a source internet protocol address, a destination internet protocol address, a source port and a destination port. Patricia tree 206 can be preprogrammed with what packet data it needs to extract, and in other embodiments can extract a metadata string with other values. In an embodiment, the metadata string can be a 12 byte string of data, but other sizes of metadata strings are possible, where the size of the metadata strings can depend on the information that is extracted. In an embodiment, AVL search tree 204 can be preprogrammed with all the supporting sessions, current and otherwise.

In an embodiment, patricia tree 206 and flow pinning component 202 receive the packet headers alone while the packets are held until AVL search tree 204 determines which buffer pools to copy the packets to. In other embodiments, flow pinning component 202 receives the packets, and on onboard Ethernet direct memory access engine copies the packets to the memory based on the results of the AVL search tree 204 determination.

**FIG. 3** illustrates an embodiment of a system 300 that performs metadata extraction from a packet header. System 300 provides additional details for metadata string extraction described in reference to **FIG. 2****.** Patricia tree 304 receives a packet header 302. The packet header can contain information about where the packet originated from, where it is headed, and its mode of transportation. Patricia tree 304, based on a preprogrammed determination of the type of data to extract, can then extract, and form a metadata string of 4 values (shown as [W,X,Y,Z] in packet header 306). The values [W,X,Y,Z] can correspond to source IP address, destination IP address, source port, and destination port.

In other embodiments the values can correspond to other information about the packets. Additionally, in other embodiments, the metadata string can include fewer than 4 values, or greater than 4 values.

**FIG. 4** illustrates an embodiment of a system 400 that performs packet enqueuing. System 400 includes SoC 402 that receive packet 404 via SoC 402's Ethernet interface. Packet 404 includes a packet header 406 with a metadata string [W,X,Y,Z] that a patricia tree (e.g., patricia tree 206 and 304) has extracted. AVL search tree 410 uses the metadata string extracted by the patricia tree to determine the associated result database 414 for packet header 406 and packet 404.

The associated result databases include the information such as which free buffer pool (418, 420, 422, and/or 422) in a memory 416 to copy the packet to, and which of the queues in which to enqueue the message to inform the CPU of a new packet. AVL search tree 410 thus correlates the source and destination addresses and the source and destination ports with the result database 414 in order to determine which core of the CPU the packet 404 should be associated with and/or otherwise assigned to. In an embodiment, AVL search tree 410 can be preprogrammed with all supporting sessions, current and otherwise.

Once AVL search tree 410 determines which result database 414 packet 404 and packet header 406 are associated with, Ethernet DMA engine 412 can be configured to assign and/or copy packet 404 to buffer pool 418, 410, 422, or 424 that packet 404 is associated with. Each of buffer pools 418, 410, 422, and 424 can be associated with one or more of the respective cores of the system CPU.

The Ethernet DMA engine 412 can also be configured to assign the packet to a queue based on the result database, wherein the queue is associated with a respective core of the CPU. Once assigned, Ethernet DMA engine 412 enqueues a descriptor message to the assigned queue.

**FIG. 5** illustrates an embodiment of a system 500 that performs flow pinning. System 500 includes SoC 502 that receive a packet via SoC 402's Ethernet interface. The packet can includes a packet header with a metadata string [W,X,Y,Z] that a flow pinning component 506 (e.g. patricia tree 206 or 304 and AVL search tree 204 or 410) can extract and be used to associate the packet with a result database and buffer pool in memory 504.

An Ethernet DMA engine on SoC 502 (not shown) can then copy the packet to the associated buffer pool in memory 504, while also sending a descriptor message to queue manager 508. The descriptor message is enqueued in one of queues 512, 514, 516, or 518 that correspond to the core of system CPU 510 that the packet has been assigned to. Each of queues 512, 514, 516, and 518 can be configured to issue a unique interrupt to their respective core of system CPU 510. Once interrupted, the descriptor message provides details about the presence of the packet, and where it is located in memory 504.

SoC 502 and its components are capable of receiving multiple packets in parallel. As the different flows are simultaneously received, descriptor messages are enqueued in queues 512, 514, 516, and 518 in parallel, and thus each of the cores of system CPU 510 receive their associated packet streams in parallel. This avoids the need for using global locking to prevent multiple cores reading a single queue since there are multiple queues, each dedicated to each processor of system CPU 510.

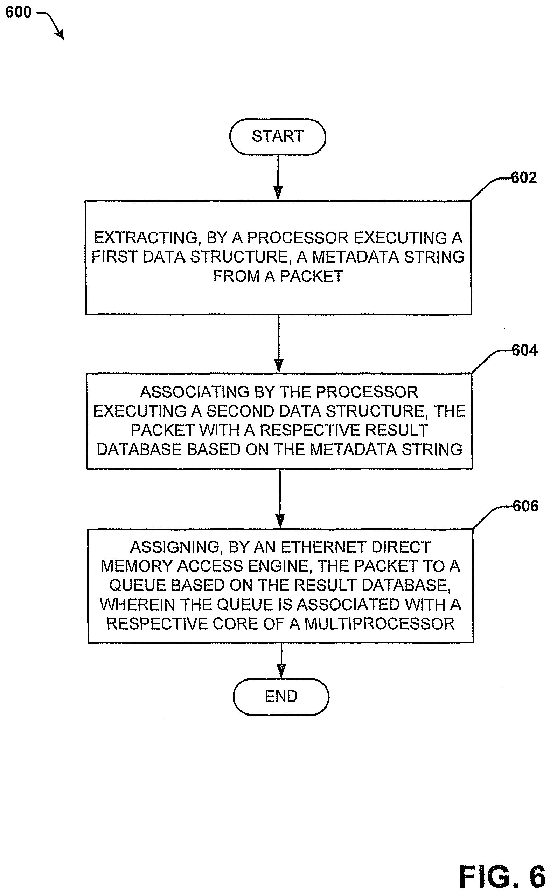

**FIGs. 6-9** illustrate processes in connection with the aforementioned systems. The process in **FIG. 6-9** can be implemented for example by systems 100, 200, 300, 400, and 500 and illustrated in **FIGs. 1-5** respectively. While for purposes of simplicity of explanation, methods are shown and described as a series of blocks, it is to be understood that the claimed subject matter is not limited by the order of the blocks, as some blocks may occur in different orders and/or concurrently with other blocks from what is depicted and described herein. Moreover, not all illustrated blocks may be required to implement the methods described hereinafter.

**FIG. 6** illustrates a flow diagram of an embodiment of a computer implemented method for performing flow pinning of a packet stream to a core of a multiprocessor.

Method 600 can start at 602, where extraction of a metadata string from a packet can be performed by a first processor executing a first data structure. The first data structure can be a patricia tree (e.g., patricia tree 206 or 304). The patricia tree can be a space optimized trie data structure where each node with only one child is merged with its child. Patricia trees in general are useful for constructing associative arrays with keys that can expressed as strings. In an embodiment, the patricia tree can be configured for extracting a metadata string from a packet or packet header. The metadata string extracted by the patricia tree can be a 4-tuple string that includes a source internet protocol address, a destination internet protocol address, a source port and a destination port. The patricia tree can be preprogrammed with what packet data it needs to extract, and in other embodiments can extract a metadata string with other values.

At 604, the packet can be associated with a respective result database by the processor executing a second data structure, wherein the associating is based on the metadata string. The second data structure can be a AVL search tree (e.g., AVL search tree 204 or 410). The AVL search tree is a second data structure that then uses the metadata string extracted by the patricia tree to determine the associated result database for each packet/packet header. The associated result databases include the information such as which free buffer pool in a memory to copy the packet to, and which of the queues in which to enqueue the message to inform the CPUs of a new packet. The AVL search tree thus correlates the source and destination addresses and the source and destination ports with the result databases in order to determine which CPU the packet should be associated with and/or otherwise assigned to. In an embodiment, the AVL search tree associates the packet with the associated result database based on indexing a lookup table with the metadata string.

At 606, the packet can be assigned, by an Ethernet DMA engine (e.g., Ethernet DMA engine 412) to a queue based on the result database, wherein the queue is associated with a respective core of a multiprocessor. The Ethernet DMA engine can copy the packet to a free buffer pool determined by the result database, and also enqueue in the queues a descriptor message for the CPUs. The descriptor message provides details about the presence of the packet, and where it is located in the memory.

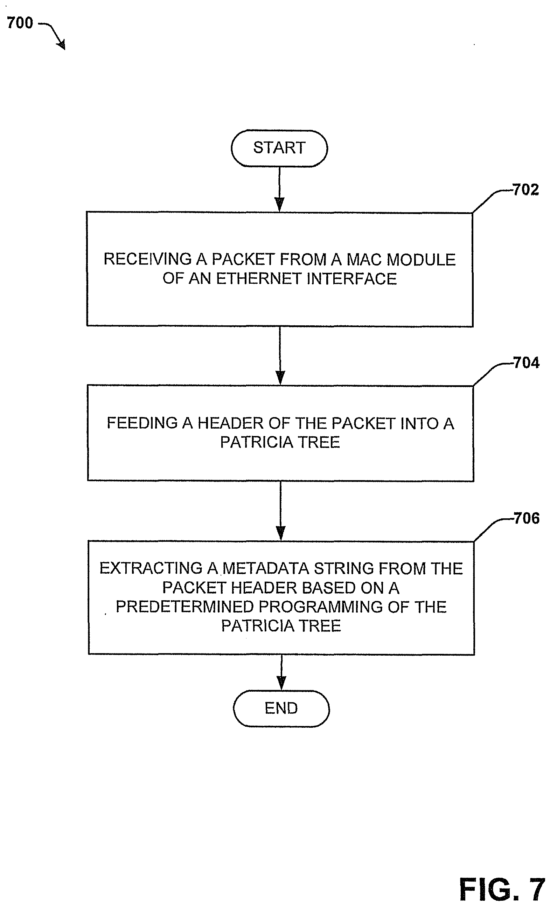

**FIG. 7** illustrates a flow diagram of an embodiment of means for extracting a metadata string from a packet data. At 702, a packet is received from a MAC module of an Ethernet interface (e.g., Ethernet interface 104). The Ethernet interface can have one or more Ethernet lines attached to it, and in an embodiment, can also be coupled to a wireless (e.g., WIFI 802.11a/b/g/n/ac) adapter. The Ethernet interface can receive incoming packets over a network. The packets can form one or more streams or flows of data that are associated with one or more other computing devices on the network. In some embodiments, multiple flows of packets can be received from a single computing device, and in other embodiments, multiple flows of packets can be received from corresponding computing devices. The computing devices that the packets are received from can include one or more of routers, switches, directly from other SoCs, and the packets can be received via the local network, intranet, or Internet.

At 704, a header of the packet can be fed into a patricia tree. At 706, a metadata string is extracted from the header of the packet based on a predetermine programming of the patricia tree. The metadata string extracted by the patricia tree can be a 4-tuple string that includes a source internet protocol address, a destination internet protocol address, a source port and a destination port.

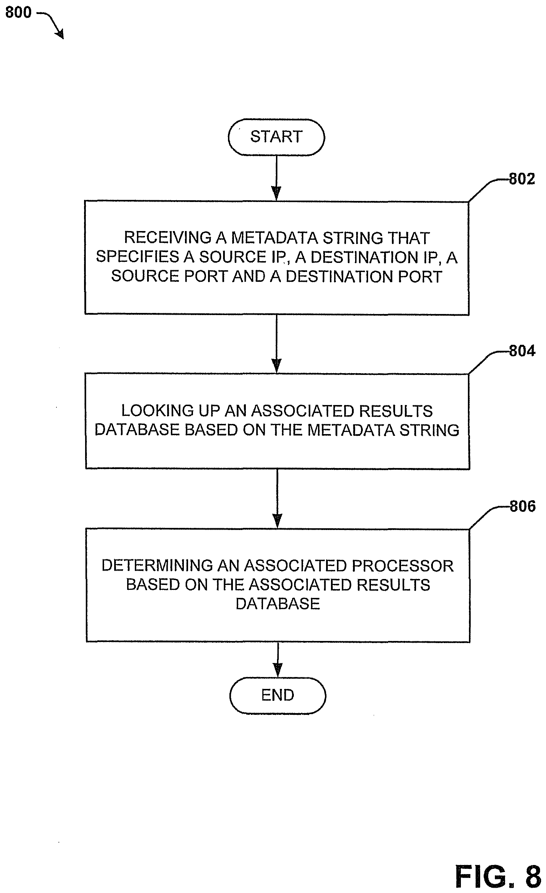

**FIG. 8** illustrates a flow diagram of an embodiment of a means for associating the packet with a respective processor based on the metadata string. At 802, a metadata string is received that specifies a source IP, a destination IP, a source port, and a destination port. This information can be used to determine where the packet originated from, the intended recipient, also something about the nature of the packet contents (based on the port).

At 804, an associated results database is looked up based on the metadata string. The lookup can be performed by an AVL search tree data structure. In an embodiment, the AVL search tree looks up one single entry per flow, and can be programmed with all the supporting sessions.

At 806, an associated processor can be determined based on the associated results table. The AVL search tree can associated the packet with the based on indexing a lookup table with the metadata string.

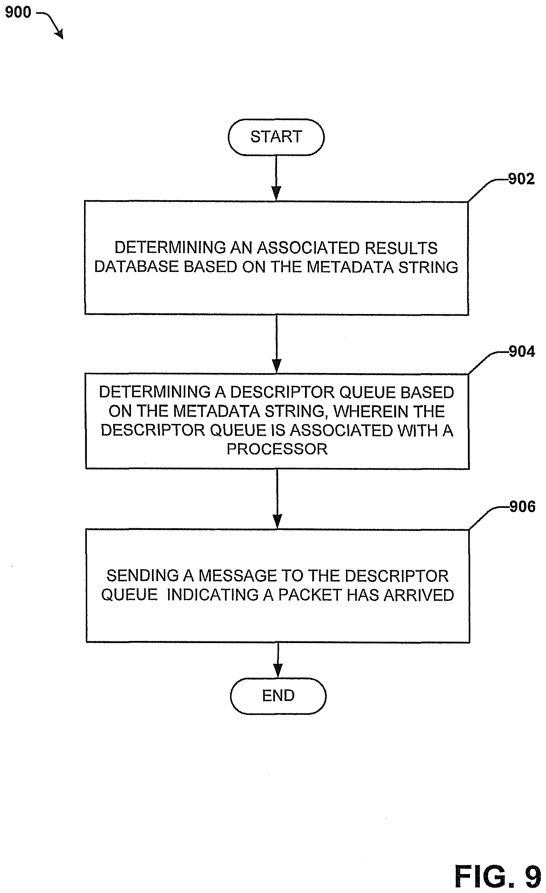

**FIG. 9** illustrates a flow diagram of an embodiment of means for assigning the packet to a queue associated with the processor. At 902, an associated results data base is determined based on the metadata string. The AVL search tree can associated the packet with the based on indexing a lookup table with the metadata string.

At 904, a descriptor queue can be determined based on the metadata string, wherein the descriptor queue is associated with a processor. By correlating the metadata string with the associated results database, the processor that the packet belongs to, or should be assigned to can be determined. Since each queue is associated with a respective processor, the packet can be delivered to the appropriate descriptor queue.

At 906, a message is sent to the descriptor queue indicating that a packet has arrived. The message can be sent by an Ethernet DMA engine, and can indicate the location of the packet, and which buffer pool the packet has been stored in.

Advantageously, the techniques described herein can be applied to any device where it is desirable to facilitate the execution of flow pinning. Therefore, handheld, portable and other computing devices and computing objects of all kinds are contemplated for use in connection with the various nonlimiting embodiments. Accordingly, the below general purpose remote computer described below in **FIG. 9** is but one example, and the disclosed subject matter can be implemented with any client having network/bus interoperability and interaction. Thus, the disclosed subject matter can be implemented in an environment of networked hosted services in which very little or minimal client resources are implicated, e.g., a networked environment in which the client device serves merely as an interface to the network/bus, such as an object placed in an appliance.

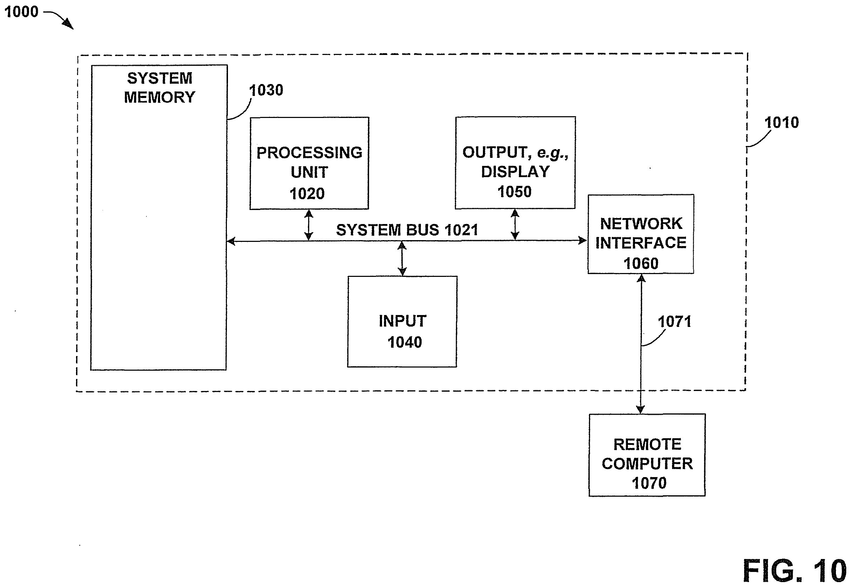

**FIG. 10** illustrates an example of a computing system environment 1000 in which aspects of the disclosed subject matter can be implemented, although the computing system environment 1000 is only one example of a computing environment for a device and is not any intended limitation. Neither should the computing environment 1000 be interpreted as having any dependency or requirement relating to any one or combination of components illustrated in the exemplary operating environment 1000.

**FIG. 10** depicts an exemplary device for implementing the disclosed subject matter includes a general-purpose computing device in the form of a computer 1010. Components of computer 1010 may include any of a processing unit 1020, a system memory 1030, and a system bus 1021 that couples various system components including the system memory to the processing unit 1020.

Computer 1010 typically includes a variety of computer readable media which can be used to store the desired information and which can be accessed by computer 1010.

The computer 1010 can operate in a networked or distributed environment using logical connections to one or more other remote computer(s), such as remote computer 1070, which can in turn have media capabilities different from device 1010. The remote computer 1070 can be a personal computer, a server, a router, a network PC, a peer device, personal digital assistant (PDA), cell phone, handheld computing device, a projection display device, a viewing device, or other common network node, or any other remote media consumption or transmission device, and may include any or all of the elements described above relative to the computer 1010. The logical connections depicted in **FIG. 10** include network 1071, such local area network (LAN) or a wide area network (WAN), but can also include other networks/buses, either wired or wireless. Such networking environments are commonplace in homes, offices, enterprise-wide computer networks, intranets and the Internet.

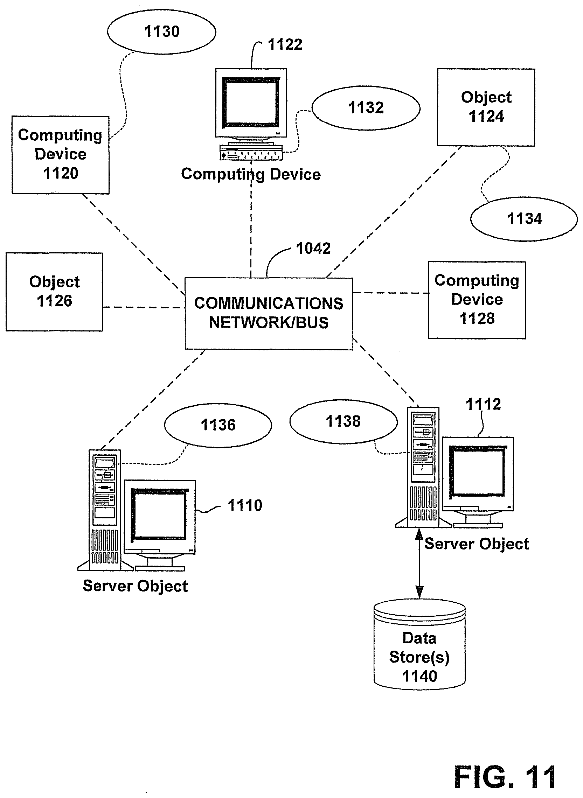

**FIG. 11** provides a schematic diagram of an exemplary networked or distributed computing environment. Each computing object 1110, 1112, etc. and computing objects or devices 1120, 1122, 1124, 1126, 1128, etc. can communicate with one or more other computing objects 1110, 1112, etc. and computing objects or devices 1120, 1122, 1124, 1126, 1128, etc. by way of the communications network 1142, either directly or indirectly.

As another example, an architecture can include an arrangement of electronic hardware (e.g., parallel or serial transistors), processing instructions and a processor, which implement the processing instructions in a manner suitable to the arrangement of electronic hardware.

The disclosed subject matter can be implemented as a method, apparatus, or article of manufacture using typical manufacturing, programming or engineering techniques to produce hardware, firmware, software, or any suitable combination thereof to control an electronic device to implement the disclosed subject matter. In addition, the media can include non-transitory media, or transport media. In one example, non-transitory media can include computer readable hardware media.

## Claims

1. A server on a chip, comprising:
a flow pinning component (106, 506) configured for extracting metadata strings from packets and configured for associating the packets with result databases based on the metadata strings, and configured for extracting a first metadata string from a first packet and associating the first packet with a result database based on the first metadata string; and
an Ethernet direct memory access engine (412) configured for assigning each of the packets to a respective queue of a plurality of queues (112, 114, 116, 118; 512, 514, 516, 518) based on the associated result database and configured for sending descriptor messages for the packets, and configured for assigning the first packet to a first queue based on the associated result database and sending a first descriptor message for the first packet, wherein each of the plurality of queues is associated with a respective core of a multiprocessor (110, 510) and each core of said multiprocessor is assigned one of the plurality of queues, and wherein the first queue is associated with a first core of the multiprocessor, wherein each descriptor message comprises data that provides details about the presence of the respective packet and the location of the respective packet in a memory of the server on a chip, and wherein the first descriptor message comprises data that provides details about the presence of the first packet and the location of the first packet in the memory; and a queue manager (108, 508) configured for receiving the descriptor messages from the Ethernet direct memory access engine, enqueuing the descriptor messages in the queues, and issuing interrupts to the cores of the multiprocessor, and configured for receiving the first descriptor message from the Ethernet direct memory access engine, enqueueing the first descriptor message in the first queue, and issuing an interrupt to the first core of the multiprocessor.

2. The server on a chip of claim 1, wherein the flow pinning component comprises a patricia tree and an AVL search tree.

3. The server on a chip of claim 1, wherein the metadata strings each comprise a source internet protocol address, a destination internet protocol address, a source port, and a destination port.

4. The server on a chip of claim 1, wherein the metadata strings are each a 12 byte long string that contains 4 items of information.

5. The server on a chip of claim 1, wherein the flow pinning component is configured to extract a plurality of metadata strings from a plurality of packets and associate the packets with the associated result database based on indexing a lookup table with the metadata strings.

6. The server on a chip of claim 1,
wherein the Ethernet direct memory access engine is further configured for copying each of the packets to a free buffer pool based on the associated result database.

7. A computer implemented method for performing flow pinning of a packet stream to a core of a multiprocessor, comprising:
extracting metadata strings from packets in a packet stream, and extracting a first metadata string from a first packet in the packet stream;
associating each of the packets with a result database based on the respective metadata strings, and associating the first packet with a respective result database based on the first metadata string;
assigning, by an Ethernet direct memory access engine, each of the packets to a respective queue of a plurality of queues based on the associated result database and sending descriptor messages for the packets, and assigning, by the Ethernet direct memory access engine, the first packet to a first queue based on the associated result database and sending a first descriptor message for the first packet, wherein each of the plurality of queues is associated with a respective core of a multiprocessor and each core of said multiprocessor is assigned one of the plurality of queues, and wherein the first queue is associated with a first core of the multiprocessor, wherein each descriptor message comprises data that provides details about the presence of the respective packet and the location of the respective packet in a memory of the server on a chip, and wherein the first descriptor message comprises data that provides details about the presence of the first packet and the location of the first packet in the memory; and
receiving, by a queue manager, the descriptor messages from the Ethernet direct memory access engine, enqueuing, by a queue manager, the descriptor messages in the queues, and issuing, by the queue manager, interrupts to the cores of the multiprocessor, and receiving, by the queue manager, the first descriptor message from the Ethernet direct memory access engine, enqueueing, by the queue manager, the first descriptor message in the first queue, and issuing, by the queue manager, an interrupt to the first core of the multiprocessor.

8. The computer implemented method of claim 7, wherein the extracting further comprises extracting a 12 byte long metadata string using a patricia tree, and the string comprises a source internet protocol address, a destination internet protocol address, a source port, and a destination port.

9. The computer implemented method of claim 7, wherein the interrupts are issued to the respective core via the assigned queues; wherein the extracting further comprises extracting a plurality of metadata strings from a plurality of packets; and the method further copying the first packet to a free buffer pool based on the associated result database

## Patentansprüche

1. Server auf einem Chip, umfassend:
eine Flow-Pinning-Komponente (106, 506), konfiguriert zum Abziehen von Metadatenfolgen aus Paketen und konfiguriert zum Assoziieren der Pakete mit Ergebnisdatenbänken basierend auf den Metadatenfolgen, und konfiguriert zum Abziehen einer ersten Metadatenfolge aus einem ersten Paket und Assoziieren des ersten Pakets mit einer Ergebnisdatenbank basierend auf der ersten Metadatenfolge; und
eine Ethernet-Direktspeicherzugriffs-Engine (412), konfiguriert zum Zuordnen jedes der Pakete zu einer jeweiligen Warteschlange einer Vielzahl von Warteschlangen (112, 114, 116, 118; 512, 514, 516, 518) basierend auf der assoziierten Ergebnisdatenbank, und konfiguriert zum Senden von Deskriptor-Nachrichten für die Pakete, und konfiguriert zum Zuordnen des ersten Pakets zu einer ersten Warteschlange basierend auf der assoziierten Ergebnisdatenbank und Senden einer ersten Deskriptor-Nachricht für das erste Paket, wobei jede der Vielzahl von Warteschlangen mit einem jeweiligen Kern eines Multiprozessors (110, 510) assoziiert ist, und jeder Kern des Multiprozessors einer der Vielzahl von Warteschlangen zugeordnet ist, und wobei die erste Warteschlange mit einem ersten Kern des Multiprozessors assoziiert ist, wobei jede Deskriptor-Nachricht Daten umfasst, die Details über die Präsenz des jeweiligen Pakets und den Platz des jeweiligen Pakets in einem Speicher des Servers auf einem Chip bereitstellt, und wobei die erste Deskriptor-Nachricht Daten umfasst, die Details über die Präsenz des ersten Pakets und den Platz des ersten Pakets im Speicher zur Verfügung stellt; und einen Warteschlangenmanager (108, 508), konfiguriert zum Empfangen der Deskriptor-Nachrichten von der Ethernet-Direktspeicherzugriffs-Engine, Einreihen der Deskriptor-Nachrichten in die Warteschlangen und Ausgeben von Unterbrechungen an die Kerne des Multiprozessors, und konfiguriert zum Empfangen der ersten Deskriptor-Nachricht von der Ethernet-Direktspeicherzugriffs-Engine, Einreihen der ersten Deskriptor-Nachricht in die erste Warteschlange, und Ausgeben einer Unterbrechung an den ersten Kern des Multiprozessors.

2. Server auf einem Chip nach Anspruch 1, wobei die Flow-Pinning-Komponente aus einem Patricia-Trie und einem AVL-Baum besteht.

3. Server auf einem Chip nach Anspruch 1, wobei die Metadatenfolgen jeweils eine IP-Quelladresse, eine IP-Zieladresse, einen Quellport und einen Zielport umfassen.

4. Server auf einem Chip nach Anspruch 1, wobei die Metadatenfolgen jeweils eine 12 Byte lange Folge sind, die 4 Datenelemente enthält.

5. Server auf einem Chip nach Anspruch 1, wobei die Flow-Pinning-Komponente konfiguriert ist, eine Vielzahl von Metadatenfolgen aus einer Vielzahl von Paketen abzuziehen und die Pakete mit der assoziierten Ergebnisdatenbank basierend auf dem Indexieren einer Verweistabelle mit den Metadatenfolgen zu assoziieren.

6. Server auf einem Chip nach Anspruch 1,
wobei die Ethernet-Direktspeicherzugriffs-Engine des Weiteren konfiguriert ist zum Kopieren jedes der Pakete in einen freien Pufferpool basierend auf der assoziierten Ergebnisdatenbank.

7. Computerimplementiertes Verfahren zur Durchführung von Flow-Pinning eines Paketstroms zu einem Kern eines Multiprozessors, umfassend:
Abziehen von Metadatenfolgen aus Paketen in einem Paketstrom, und Abziehen einer ersten Metadatenfolge aus einem ersten Paket in dem Paketstrom;
Assoziieren jedes der Pakete mit einer Ergebnisdatenbank basierend auf den jeweiligen Metadatenfolgen, und Assoziieren des ersten Pakets mit einer jeweiligen Ergebnisdatenbank basierend auf der ersten Metadatenfolge;
Zuordnen, durch eine Ethernet-Direktspeicherzugriffs-Engine, jedes der Pakete einer jeweiligen Warteschlange einer Vielzahl von Warteschlangen basierend auf der assoziierten Ergebnisdatenbank und Senden von Deskriptor-Nachrichten für die Pakete, und Zuordnen, durch die Ethernet-Direktspeicherzugriffs-Engine, des ersten Pakets einer ersten Warteschlange basierend auf der assoziierten Ergebnisdatenbank und Senden einer ersten Deskriptor-Nachricht für das erste Paket, wobei jede der Vielzahl von Warteschlangen mit einem jeweiligen Kern eines Multiprozessors assoziiert ist und jeder Kern des Multiprozessors einer der Vielzahl von Warteschlangen zugeordnet ist, und wobei die erste Warteschlange mit einem ersten Kern des Multiprozessors assoziiert ist, wobei jede Deskriptor-Nachricht Daten umfasst, die Details über die Präsenz des jeweiligen Pakets und den Platz des jeweiligen Pakets in einem Speicher des Servers auf einem Chip zur Verfügung stellen, und wobei die erste Deskriptor-Nachricht Daten umfasst, die Details über die Präsenz des ersten Pakets und den Platz des ersten Pakets in dem Speicher zur Verfügung stellen; und
Empfangen, durch einen Warteschlangenmanager, der Deskriptor-Nachrichten von der Ethernet-Direktspeicherzugriffs-Engine, Einreihen, durch einen Warteschlangenmanager, der Deskriptor-Nachrichten in den Warteschlangen, und Ausgeben, durch den Warteschlangenmanager, von Unterbrechungen an die Kerne des Multiprozessors, und Empfangen, durch den Warteschlangemanager, der ersten Deskriptor-Nachricht von der Ethernet-Direktspeicherzugriffs-Engine, Einreihen, durch den Warteschlangenmanager, der ersten Deskriptor-Nachricht in der ersten Warteschlange, und Ausgeben, durch den Warteschlangenmanager, einer Unterbrechung an den ersten Kern des Multiprozessors.

8. Computerimplementiertes Verfahren nach Anspruch 7, wobei das Abziehen des Weiteren Abziehen einer 12 Byte langen Metadatenfolge unter Verwendung eines Patricia-Tries umfasst, und die Folge eine IP-Quelladresse, eine IP-Zieladresse, einen Quellport und einen Zielport umfasst.

9. Computerimplementiertes Verfahren nach Anspruch 7, wobei die Unterbrechungen an den jeweiligen Kern über die zugeordneten Warteschlangen ausgegeben werden;
wobei das Abziehen des Weiteren Abziehen einer Vielzahl von Metadatenfolgen aus einer Vielzahl von Paketen umfasst; und das Verfahren außerdem das erste Paket in einen freien Pufferpool basierend auf der assoziierten Ergebnisdatenbank kopiert.

## Revendications

1. Serveur sur une puce, comprenant :
un composant d'épinglage de flux (106, 506) configuré pour extraire des chaînes de métadonnées depuis des paquets et configuré pour associer les paquets à des bases de données de résultats sur la base des chaînes de métadonnées, et configuré pour extraire une première chaîne de métadonnées depuis un premier paquet et associer le premier paquet à une base de données de résultats sur la base de la première chaîne de métadonnées ; et
un moteur d'accès direct en mémoire par Ethernet (412) configuré pour assigner chacun des paquets à une file d'attente respective d'une pluralité de files d'attente (112, 114, 116, 118 ; 512, 514, 516, 518) sur la base de la base de données de résultats associée et configuré pour envoyer des messages de descripteur pour les paquets, et configuré pour assigner le premier paquet à une première file d'attente sur la base de la base de données de résultats associée et envoyer un premier message de descripteur pour le premier paquet, dans lequel chacune de la pluralité de files d'attente est associée à un cœur respectif d'un multiprocesseur (110, 510) et chaque cœur dudit multiprocesseur se voit assigner l'une de la pluralité de files d'attente, et dans lequel la première file d'attente est associée à un premier cœur du multiprocesseur, dans lequel chaque message de descripteur comprend une donnée qui fournit des indications sur la présence du paquet respectif et l'emplacement du paquet respectif dans une mémoire du serveur sur une puce, et dans lequel le premier message de descripteur comprend une donnée qui fournit des indications sur la présence du premier paquet et l'emplacement du premier paquet dans la mémoire ; et
un gestionnaire de files d'attente (108, 508) configuré pour recevoir les messages de descripteur depuis le moteur d'accès direct en mémoire par Ethernet, mettre en file d'attente les messages de descripteur dans les files d'attente et émettre des interruptions vers les cœurs du multiprocesseur, et configuré pour recevoir le premier message de descripteur depuis le moteur d'accès direct en mémoire par Ethernet, mettre en file d'attente le premier message de descripteur dans la première file d'attente et émettre une interruption vers le premier cœur du multiprocesseur.

2. Serveur sur une puce selon la revendication 1, dans lequel le composant d'épinglage de flux comprend un arbre patricia et un arbre de recherche AVL.

3. Serveur sur une puce selon la revendication 1, dans lequel les chaînes de métadonnées comprennent chacune une adresse de protocole Internet de source, une adresse de protocole Internet de destination, un port de source et un port de destination.

4. Serveur sur une puce selon la revendication 1, dans lequel les chaînes de métadonnées sont chacune une chaîne d'une longueur de 12 octets qui contient 4 éléments d'information.

5. Serveur sur une puce selon la revendication 1, dans lequel le composant d'épinglage de flux est configuré pour extraire une pluralité de chaînes de métadonnées depuis une pluralité de paquets et associer les paquets à la base de données de résultats associée sur la base d'une indexation d'une table de consultation avec les chaînes de métadonnées.

6. Serveur sur une puce selon la revendication 1,
dans lequel le moteur d'accès direct en mémoire par Ethernet est en outre configuré pour copier chacun des paquets vers un pool tampon libre sur la base de la base de données de résultats associée.

7. Procédé mis en œuvre par ordinateur destiné à réaliser un épinglage de flux d'un train de paquets vers un cœur d'un multiprocesseur, comprenant les étapes consistant à :
extraire des chaînes de métadonnées depuis des paquets dans un train de paquets et extraire une première chaîne de métadonnées depuis un premier paquet dans le train de paquets ;
associer chacun des paquets à une base de données de résultats sur la base des chaînes de métadonnées respectives et associer le premier paquet à une base de données de résultats respective sur la base de la première chaîne de métadonnées ;
assigner, par un moteur d'accès direct en mémoire par Ethernet, chacun des paquets à une file d'attente respective d'une pluralité de files d'attente sur la base de la base de données de résultats associée et envoyer des messages de descripteur pour les paquets, et assigner, par le moteur d'accès direct en mémoire par Ethernet, le premier paquet à une première file d'attente sur la base de la base de données de résultats associée et envoyer un premier message de descripteur pour le premier paquet, dans lequel chacune de la pluralité de files d'attente est associée à un cœur respectif d'un multiprocesseur et chaque cœur dudit multiprocesseur se voit assigner l'une de la pluralité de files d'attente, et dans lequel la première file d'attente est associée à un premier cœur du multiprocesseur, dans lequel chaque message de descripteur comprend une donnée qui fournit des indications sur la présence du paquet respectif et l'emplacement du paquet respectif dans une mémoire du serveur sur une puce, et dans lequel le premier message de descripteur comprend une donnée qui fournit des indications sur la présence du premier paquet et l'emplacement du premier paquet dans la mémoire ; et
recevoir, par un gestionnaire de files d'attente, les messages de descripteur depuis le moteur d'accès direct en mémoire par Ethernet, mettre en file d'attente, par un gestionnaire de files d'attente, les messages de descripteur dans les files d'attente et émettre, par le gestionnaire de files d'attente, des interruptions vers les cœurs du multiprocesseur, et recevoir, par le gestionnaire de files d'attente, le premier message de descripteur depuis le moteur d'accès direct en mémoire par Ethernet, mettre en file d'attente, par le gestionnaire de files d'attente, le premier message de descripteur dans la première file d'attente et émettre, par le gestionnaire de files d'attente, une interruption vers le premier cœur du multiprocesseur.

8. Procédé mis en œuvre par ordinateur selon la revendication 7, dans lequel l'étape d'extraction comprend en outre l'extraction d'une chaîne de métadonnées d'une longueur de 12 octets à l'aide d'un arbre patricia, et la chaîne comprend une adresse de protocole Internet de source, une adresse de protocole Internet de destination, un port de source et un port de destination.

9. Procédé mis en œuvre par ordinateur selon la revendication 7, dans lequel les interruptions sont émises vers le cœur respectif via les files d'attente assignées ;
dans lequel l'étape d'extraction comprend en outre l'extraction d'une pluralité de chaînes de métadonnées depuis une pluralité de paquets ; et le procédé copiant en outre le premier paquet vers un pool tampon libre sur la base de la base de données de résultats associée.
